# EUROPEAN PATENT SPECIFICATION

(11) **EP 4 183 967 B1**
(45) Date of publication and mention of the grant of the patent: **13.12.2023**
(21) Application number: 22208277.8
(22) Date of filing: 18.11.2022
(51) Int. Cl.: E06B 9/17

(54) **MOVABLE COVER FOR A BUILDING COMPONENT**
BEWEGLICHE ABDECKUNG FÜR EIN BAUTEIL
COUVERTURE MOBILE POUR UN ÉLÉMENT DE CONSTRUCTION

(30) Priority: 22.11.2021 PL 43959121
(43) Date of publication of application: 24.05.2023
(73) Proprietor: FAKRO PP Sp. z o.o., 33-300 Nowy Sacz (PL)
(72) Inventor: Jeczmyk, Tomasz, 33-300 Nowy Sacz (PL); Kasinski, Boguslaw, 34-601 Limanowa (PL)

(56) References cited:
- EP-A1- 2 390 455
- WO-A1-2021/164149

## Description

The object of the invention is a movable cover for a building component, in particular a window roller shutter.

A roll-up shutter with a top element, two side rails at right angles to the top element and a shutter body comprising numerous slats which supplies cover has been disclosed in patent description PL/EP2390455T3. The ends of the slats run in the side rails, and the aforementioned top element is adapted for connection with at least one photovoltaic panel. The top element comprises an external guide oriented in a longitudinal direction on the outer side of the top element, wherein, said guide is designed to accommodate the photovoltaic panel.

The known patent describes mounting of a photovoltaic panel on the top element, being a cassette of the movable shutter, resulting in exposure of the photovoltaic panel to unfavourable atmospheric conditions, such as hail. Additionally, the photovoltaic panel mounting in the known invention requires securing in the form of sealing the panel in the cassette guide to prevent ingress of rain, melting snow and other moisture under the photovoltaic panel.

Therefore, the aim of the invention is to provide a movable cover for a building component comprising two side guide rails attached to a cassette.

This is achieved by a movable cover for a building component, according to claim 1. Material covering a building component opening is run between the side guide rails. In the closed position of the movable cover, the covering material is positioned fully between the two side guide rails, whereas in its open position, the covering material is at least partially retracted into the cassette. The covering material is arranged to be rolled-up onto a coil rod inside the cassette powered by an electric rotary motor. The rotary motor is powered by a renewable energy source, in particular by a photovoltaic panel in the cassette. The cassette is at least partially made out of a transparent material with the photovoltaic panel located under it, shielded against atmospheric conditions but at the same time exposed to solar radiation. In one embodiment, said transparent material of the cassette is arranged to be transparent part of said cassette. Preferably the cassette comprising at least two profiles, with at least one out of those made out of transparent material. The cassette profiles are shaped to facilitate their connection with one another and so that the profile made out of the transparent material, referred to as the transparent profile, comprises a mounting arms and the adjacent cassette profile comprises a sockets for those mounting arms or vice-versa. To mount a photovoltaic panel in the cassette profile made out of the transparent material, that profile acts as a guide rail into which a photovoltaic panel is slotted. In another embodiment of the invention, the renewable energy source is a thin-film photovoltaic panel attached to the inner surface of the transparent part of the cassette, or the inner surface of the transparent profile by gluing or spraying. It is also possible to print perovskite solar cells on a thin-film substrate, disclosed inter alia in patent application P.429454. The cassette may also house a battery charged by electricity generated in the panel, used to power the rotary motor of the movable cover. Polycarbonate is the preferred transparent material.

The illustration shows the invention, with given figures showing the following:

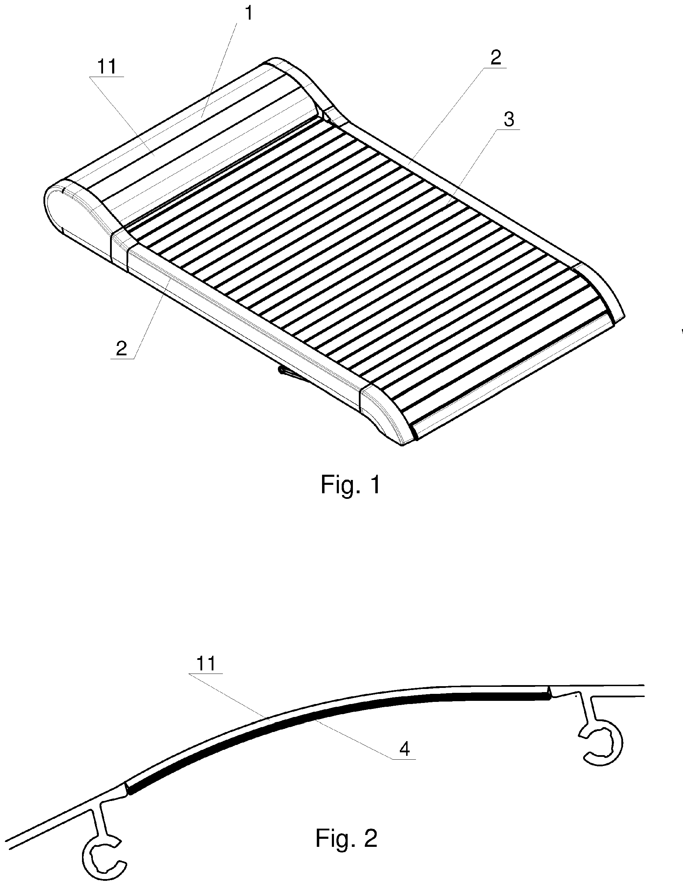

Fig. 1 perspective view of the movable cover for a building component according to the first embodiment,
Fig. 2 cross-section of the movable cover cassette according to its first embodiment,

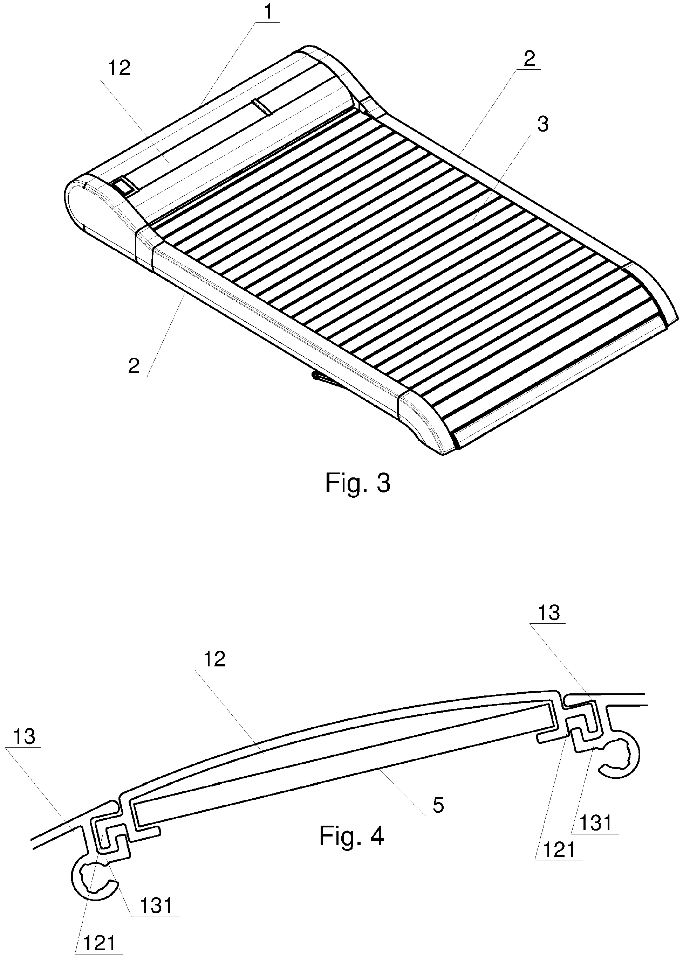

Fig. 3 perspective view of the movable cover for a building component according to the first embodiment,
Fig. 4 cross-section of the movable cover cassette according to its second embodiment,

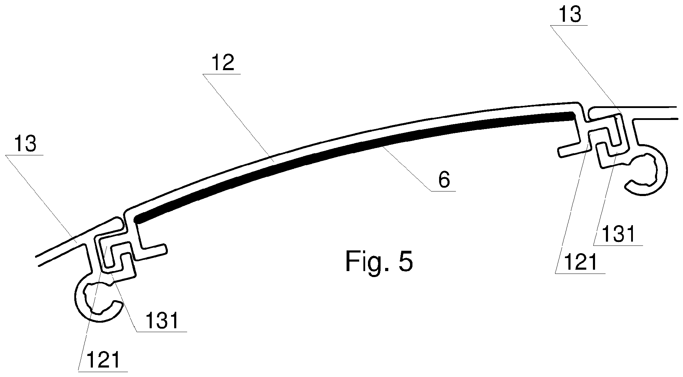

Fig. 5 cross-section of the movable cover cassette according to its third embodiment.

The movable cover according to the first embodiment is designated for mounting on a building component, in particular a roof window. The movable cover comprising a cassette 1 and two side guide rails 2. A coil rod with an electric rotary motor placed inside the cassette 1. Covering material 3 is rolled-up onto the coil rod, wherein movement of the coil rod is powered by a rotary motor. A characterising feature of the movable cover is the cassette 1, which in the first embodiment is partially made out of transparent polycarbonate in a coextrusion process for example, wherein the polycarbonate part is referred to as transparent part 11 of cassette 1. Thin-film photovoltaic panel 4 is applied to the inner surface of transparent part 11. Electricity generated by photovoltaic panel 4 is stored in the battery and used to activate the movable cover rotary motor not shown on the diagram.

The movable cover according to the second embodiment is also designated for mounting on a building component, in particular a roof window. The movable cover comprising a cassette 1 and two side guide rails 2. A coil rod with an the electric rotary motor sit inside cassette 1. Covering material 3 is rolled-up onto the coil rod, wherein movement of the coil rod is powered by a rotary motor. A characterising feature of the movable cover is its cassette 1, which in the second embodiment comprising two profiles 12, 13, wherein one of the profiles is transparent profile 12, made out of polycarbonate. Transparent profile 12 comprises the mounting arms 121 and adjacent cassette profile 13 comprises the sockets 131 for mounting arms 121. Transparent profile 12 constitutes a guide rail in which sits photovoltaic panel 5.

In the third embodiment the movable cover differs from the movable cover according to the second embodiment in that thin-film photovoltaic panel 6 applied to the inside surface of transparent profile 12 being the renewable energy source.

## Claims

1. A movable cover for a building component, comprising a cassette (1), two side guide rails (2) and a covering material (3), **characterised in that** the cassette (1) is at least partially made out of a transparent material with a renewable energy source (4, 5, 6) under its surface.

2. The movable cover, according to claim 1, **characterised in that** the cassete (1) comprising a transparent part made of a transparent material, wherein, the renewable energy source (4, 6) is mounted on an inner surface of said transparent part (11).

3. The movable cover, according to claim 1, **characterised in that** the cassette (1) comprising at least two profiles (12, 13), with at least one out of those being a transparent profile (12) made out of the transparent material.

4. The movable cover, according to claim 3, **characterised in that** transparent profile (12) comprises a mounting arms (121) and an adjacent cassette profile (13) comorises a sockets (131) for said mounting arms (121).

5. The movable cover, according to claim 3 or 4, **characterised in that** transparent profile (12) is a guide rail in which the renewable energy source (5, 6) is located.

6. The movable cover, according to claim 3 or 4, **characterised in that** the renewable energy source (4) is located on the inner surface of transparent profile (12).

7. The movable cover, according to claim 1 or 5, **characterised in that** renewable energy source (5) is a photovoltaic panel.

8. The movable cover, according to claim 1 or 2 or 6,**characterised in that** renewable energy source (4, 6) is a thin-film photovoltaic panel.

## Patentansprüche

1. Beweglicher Vorhang für ein Bauelement, bestehend aus einer Kassette (1), zwei seitlichen Führungen (2) und einem Abdeckmaterial (3), **dadurch gekennzeichnet, dass** die Kassette (1) zumindest teilweise aus transparentem Material besteht, unter dessen Oberfläche sich eine erneuerbare Energiequelle (4, 5, 6) befindet.

2. Beweglicher Vorhang nach Anspruch 1, **dadurch gekennzeichnet, dass** die erneuerbare Energiequelle (4, 6) auf der Innenfläche des transparenten Teils (11) der Kassette (1) eingebettet ist.

3. Beweglicher Vorhang nach Anspruch 1, **dadurch gekennzeichnet, dass** die Kassette des beweglichen Vorhangs aus mindestens zwei Profilen (12, 13) gefertigt ist, von denen mindestens eines, transparentes Profil (12) genannt, aus transparentem Material besteht.

4. Beweglicher Vorhang nach Anspruch 3, **dadurch gekennzeichnet, dass** das transparente Profil (12) Befestigungsarme (121) besitzt und das benachbarte Profil (13) der Kassette Schlitze (131) für die Befestigungsarme (121) besitzt.

5. Beweglicher Vorhang nach Anspruch 3 oder 4, **dadurch gekennzeichnet, dass** das transparente Profil (12) eine Führung ist, in der sich eine erneuerbare Energiequelle (5, 6) befindet.

6. Beweglicher Vorhang nach Anspruch 3 oder 4, **dadurch gekennzeichnet, dass** auf der Innenfläche des transparenten Profils (12) eine erneuerbare Energiequelle (4) angebracht ist.

7. Beweglicher Vorhang nach Anspruch 1 oder 5, **dadurch gekennzeichnet, dass** die erneuerbare Energiequelle (5) ein Photovoltaikpaneel ist.

8. Beweglicher Vorhang nach Anspruch 1, 2 oder 6, **dadurch gekennzeichnet, dass** die erneuerbare Energiequelle (4, 6) ein Dünnschicht-Photovoltaikpaneel ist.

## Revendications

1. Rideau mobile d'un élément de construction, composé d'une cassette (1), de deux guides latéraux (2), et d'un matériau de revêtement (3), **caractérisé en ce que** la cassette (1) est au moins partiellement réalisée en matériau transparent avec une source renouvelable d'énergie située sous sa surface (4, 5, 6).

2. Rideau mobile selon la revendication 1, **caractérisé en ce que** la source d'énergie renouvelable (4, 6) est montée sur la surface interne de la partie transparente (11) de la cassette (1).

3. Rideau mobile selon la revendication 1, **caractérisé en ce que** la cassette du rideau mobile est constituée d'au moins deux profilés (12, 13) dont l'un au moins, appelé profilé transparent (12), est réalisé en matériau transparent.

4. Rideau mobile selon la revendication 3, **caractérisé en ce que** le profilé transparent (12) est muni de bras de montage (121) et le profilé cassette (13) qui lui est adjacent est muni de douilles (131) destinées aux bras de montage (121).

5. Rideau mobile selon la revendication 3 ou 4, **caractérisé en ce que** le profilé transparent (12) est un guide dans lequel se trouve la source d'énergie renouvelable (5, 6).

6. Rideau mobile selon la revendication 3 ou 4, **caractérisé en ce qu'**une source d'énergie renouvelable (4) est située sur la surface intérieure du profilé transparent (12).

7. Rideau mobile selon la revendication 1 ou 5, **caractérisé en ce que** la source d'énergie renouvelable (5) est un panneau photovoltaïque.

8. Rideau mobile selon la revendication 1, 2 ou 6, **caractérisé en ce que** la source d'énergie renouvelable (4, 6) est un panneau photovoltaïque en couches minces.
